# EUROPEAN PATENT SPECIFICATION

(11) **EP 4 083 443 B1**
(45) Date of publication and mention of the grant of the patent: **20.11.2024**
(21) Application number: 22169836.8
(22) Date of filing: 25.04.2022
(51) Int. Cl.: B60T 17/02, F15B 21/08, F16H 59/72, F16H 61/00, F16H 63/50, F16H 59/68, F16H 61/12, F15B 11/16, A01B 63/10, B62D 5/07

(54) **HYDRAULIC CIRCUIT FOR AN AGRICULTURAL VEHICLE PROVIDED WITH AN ANTI-SATURATION SYSTEM AND ANTI-SATURATION CONTROL METHOD**
HYDRAULIKKREIS FÜR EIN LANDWIRTSCHAFTLICHES FAHRZEUG MIT EINEM ANTI-SÄTTIGUNGSSYSTEM UND VERFAHREN ZUR ANTI-SÄTTIGUNGSREGELUNG
CIRCUIT HYDRAULIQUE POUR UN VÉHICULE AGRICOLE POURVU D'UN SYSTÈME ANTI-SATURATION ET PROCÉDÉ DE COMMANDE ANTI-SATURATION

(30) Priority: 27.04.2021 IT 202100010577
(43) Date of publication of application: 02.11.2022
(73) Proprietor: CNH Industrial Italia S.p.A., 10156 Torino (IT)
(72) Inventor: CREA, Domenico, 41123 Modena (IT); MANTOVANI, Michele, 46026 Quistello (IT); TAGLIAZUCCHI, Alessandro, 41018 San Cesario Sul Panaro (IT)
(74) Representative: CNH Industrial IP Department

(56) References cited:
- EP-A1- 2 554 853
- DE-A1- 3 319 533

## Description

### TECHNICAL FIELD

The present invention concerns a hydraulic circuit, in particular a hydraulic circuit for an agricultural vehicle provided with an anti-saturation system and a related control method.

The present invention finds its preferred, although not exclusive, application in agricultural vehicle such as tractors.

### BACKGROUND OF THE INVENTION

Agricultural vehicles, such as tractors, comprises different hydraulic circuits that are fed by a pump that is usually carried by the internal combustion engine as shown in EP2554853A1.

As per se known there are some essential operational systems of the vehicle that needs to be fed by the hydraulic pump such as transmission, steering or braking and that are fed by a primary feeding line.

Conversely, other operational systems of the vehicle, i.e. auxiliary valves, are fed by a secondary line that is not prioritized with respect to the essential operational systems if feeding flow is not sufficient for allowing the control of the essential operational systems.

Such operation is achieved by anti-saturation systems that are based on open loop logics configured to either partition the flow into the other operational systems if the demand is higher than flow available on the secondary line, or to shut off these latter if the prioritized valve demand is higher than flow available on the secondary line
However, if no auxiliary valves are installed on the vehicle, no anti-saturation logic is performed at all. Furthermore, other operational systems of the vehicle hydraulic condition are not taken into account even if the auxiliary valves are present on the vehicle.

Therefore, it is possible that the system would not provide sufficient oil to such operational systems different with respect to auxiliary valves because there is not a dedicated control.

In view of the above, the need is felt to provide hydraulic circuit provided with anti-saturation systems that are versatile and efficient.

An aim of the present invention is to satisfy the above mentioned needs in a cost effective and optimized way.

### SUMMARY OF THE INVENTION

The aforementioned aim is reached by a hydraulic circuit and a related control method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a hydraulic system of an agricultural vehicle;
- Figure 2 is a schematic representation of the hydraulic system of figure 1 with greater details; and

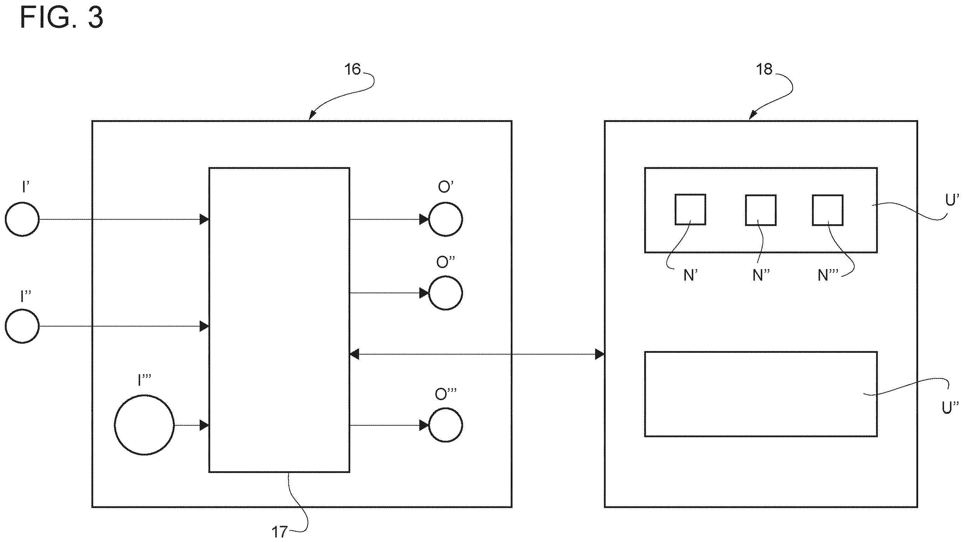

- Figure 3 is a schematic representation of an electronic control system for the hydraulic system of the invention.

### DETAILED DESCRIPTION OF THE INVENTION

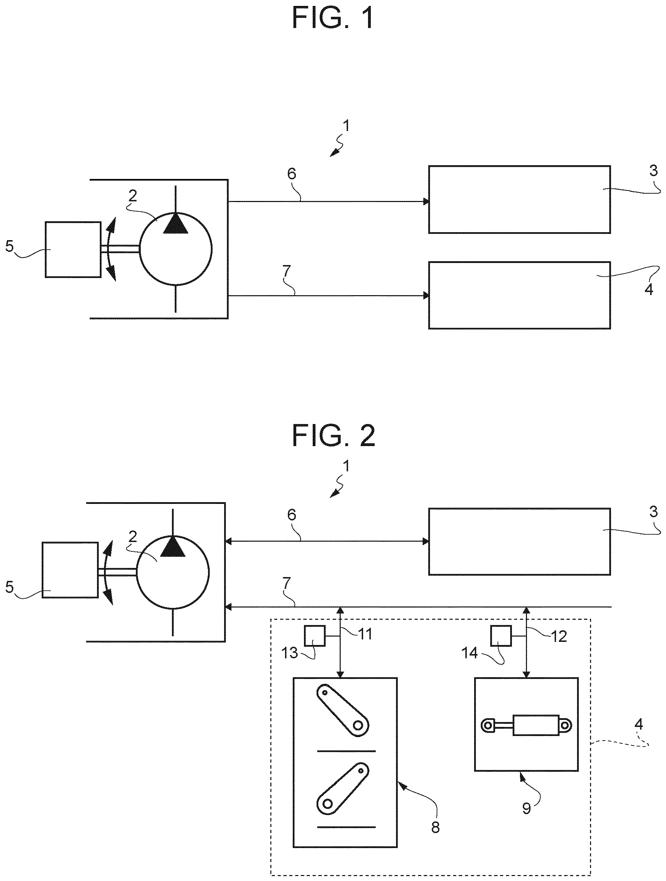

Figure 1 discloses a hydraulic circuit 1 for an agricultural vehicle (not shown) comprising pumping means 2 configured to provide a flow of oil at high pressure to fed essential operative systems hydraulic circuits 3 and other operative systems hydraulic circuits 4 of the vehicle.

In particular, the pumping means 2 may be carried in rotation to provide the oil flow by a torque source 5 such as the internal combustion engine of the vehicle or an electric motor.

The pumping means 2 are fluidly connected by a primary line conduit 6 to the essential operative system hydraulic circuits 3 and by a secondary line conduit 7 to the other operative systems hydraulic circuits 4.

The essential operative system hydraulic circuits 3 comprises the transmission hydraulic circuit, the steering hydraulic circuit and the braking hydraulic circuit.

Making reference to figure 2, the other operative systems hydraulic circuits 4 comprises an operative circuit 8 such as a hitch control hydraulic circuit and auxiliary valves hydraulic circuit 9. In particular, it is schematized a singular auxiliary valve in figure 2 but it is clear that the auxiliary valves hydraulic circuit 9 comprises different systems controlled by respective valves, e.g. EHR (Electric hydraulic remote) valves.

According to the above, the secondary line conduit 7 is fluidly connected to the hitch control hydraulic circuit 8 via a hitch conduit 11 and to the auxiliary valves hydraulic circuit 9 via a valves conduit 12.

The hydraulic circuit 1 comprises sensor means 13, 14 fluidly interposed on conduits 11 and 12 and configured to detect oil physical characteristic of the oil flow flowing in the respective conduits.

In particular, the sensor means 13, 14 may be configured to detect the flow rate , e.g. via a flow meter, or the pressure of the oil, e.g. via a pressure sensors, of the oil flow flowing in the respective conduit 11, 12.

The hydraulic system further comprise an electronic control unit 16 configured to be electrically connected to torque source 5 and sensor means 13, 14 and comprising elaboration means 17 configured to, in function of the retrieved data from said sensor means 13, 14 to control the operation of the operative system hydraulic circuits 4 and execute at least one between i) provide a warning signal and ii) control said torque source. In particular, such electronic control unit 16 may be the ECU of the vehicle.

The electronic control unit 16 is therefore configured to receive as input the following data signals:
- I', retrieved by sensor means 13 on hitch conduit 11, that relates to the oil flow/pressure flowing in conduit 11;
- I'', retrieved by sensor means 14 on valves conduit 12, that relates to the oil flow/pressure flowing in conduit 12; and
- I‴, coming from torque source 5 and relating to the power rate provided by this latter to pump 2, i.e. related to the oil flow available in secondary line 7.

The elaboration means 17 are configured to memorize a saturation logic, detailed below, configured to provide as output the following control signals in function of the above input signals:
- O', configured to manage oil demand in circuit 8;
- O", configured to manage oil demand in circuit 9;and
- O‴, configured to execute at least one between i) provide a warning signal and ii) control said torque source.

The saturation logic may provide the following controls:
- If the oil requested by circuits 8 and 9 exceeds the flow available, execute at least one between i) provide a warning signal and ii) control said torque source; and
- divide the fluid between the circuits 8 and 9 proportionally to their flow demand.

The electronic unit 16 is furthermore electronically connected to user control means 18 configured to allow to the user to vary the priority of the oil to be provided to the circuits 8 and 9.

Preferably, user control means 18 may comprise a display configured to provide a first touch area U' configured to select the auxiliary valve circuit 9 and a second touch area U" configured to select the hitch control circuit a. More preferably, the auxiliary valves of the auxiliary valve circuit 9 are represented by distinct touch areas N', N", N‴ configured to allow the selection of only one or some among the possible auxiliary valves present in the vehicle.

Accordingly, the user may select at least one between auxiliary valve circuit 9 and hitch control circuit 8, by touching the respective touch area U', U'' to allow the partition of the available fluid to only one or both between auxiliary valve circuit 9 and hitch control circuit 8.

In detail, the user may also select only one or more among the valves of auxiliary valve circuit 9 by touch areas N', N'', N " '. For instance a longstanding pressure on touch areas N', N", N‴ may select the touch areas N', N", N‴ instead of globally touch area U' . Accordingly, if the maximum torque is supplied by torque source 5 then the user may select at least one between auxiliary valves via touch areas N',N",N‴ to allow the partition of the available fluid to the selected at least one auxiliary valve.

Furthermore, display means may be further configured to show to the user values related to output data O', O' ', O' ' ', i.e. data related to the oil flow flowing to the operative system circuits 4.

The aforementioned warning signal may be displayed via the mentioned display means and/or may be an acoustic signal and/or a lighting signal. In particular, such warning signal suggest the user to increase the speed/torque provided by source 5 to increase by the fluid provide by pump into primary and secondary lines.

The control signal for controlling speed/torque source 5 will increase these latter outputs to increase the flow production of the pump till maximum availability of the torque source 5.

The warning signal may be present in substitution of the automatic control of the torque source or in combination with this latter, e.g. the automatic control may be set after a preset time interval after the warning signal is provided to the driver.

The operation of the above described hydraulic circuit provided with an ant saturation system is the following.

The user controls the vehicle to allow its travel and, in case, the use of certain operational elements such as the hitch system 8 or other systems controlled by the auxiliary valves 9.

Accordingly, the oil flow provided by pump 2 flows via primary conduit 6 towards the steering, transmission and brakes circuits of the vehicle. The remaining flow is sent via secondary conduit 7 to circuits 8 and 9 according to the control provided by the electronic control unit 16, as described above.

If the user presses, via display means, only one between hitch system 8 or auxiliary valves 9 or only one or some among the auxiliary valve, the electronic control unit 16 prioritizes the flow towards the selected systems.

In view of the above, the present invention also relates to a control method for partitioning the oil flow between different operative systems hydraulic circuits 4 of a secondary line 7 of a vehicle comprising the following steps:
i) Acquiring data (I', I'') related to the oil flow flowing in different operative systems 8, 9 of the operative systems hydraulic circuits 4;
ii) Elaborating such data to compare the detected flow with respect to the available flow (I‴)coming from pump means (2) ;
iii) If such detected flow is greater with respect to the available flow, execute at least one between i) provide a warning signal and ii) control said torque source; and
iv) divide the available flow among the different operative systems hydraulic circuits 4 in function of their flow demand.

The flow division among the different operative systems hydraulic circuits 4 may be realized proportionally to the demand of the different operative systems 8, 9.

The above-described method may further comprise the following steps:
v) Acquire input data related to user's request to provide flow to at least one among the operative systems hydraulic circuits 8, 9;
vi) Prioritize the flow coming to the secondary line to the selected at least one operative systems hydraulic circuits.

In particular, the acquisition of input data may be executed thanks to display means configured to define touch area that can be pressed by the user to provide the input data.

The warning signal may be displayed via the aforementioned display means and/or may be an acoustic signal and/or a lighting signal.

Moreover, the touch area may be in different number according to the number of auxiliary valves present in the auxiliary valve circuit 9.

In view of the foregoing, the advantages of a hydraulic circuit and related control method according to the invention are apparent.

Thanks to the proposed system and control method, it is possible to provide an improved anti saturation logic.

In particular, it is possible to involve other systems than the auxiliary valves to control the distribution of the available oil flow.

According to the above, the comfort of the operation of the vehicle is increase; indeed the user may select the behaviors of the anti saturation logic according to the specific work need.

Furthermore, the warning signal allows the user to increase the speed/torque provided by torque source. In this way, it may be provided enough fluid to all primary and secondary line systems without the need of dividing this latter, at least within the torque source capabilities.

If configured, the control unit will automatically increase the speed/torque provided by torque source thereby automatically providing the needed flow via pump carried by the torque source.

It is clear that modifications can be made to the described hydraulic circuit and related control method which do not extend beyond the scope of protection defined by the claims.

For example, as said, more auxiliary valves may be present or a different operative system with respect to the hitch circuit. E.g., the user control means 18 may comprise other elements such as buttons instead or the described display.

Furthermore, the control law described above may be different.

## Claims

1. Hydraulic circuit (1) for an agricultural vehicle comprising a pump (2) carried by a torque source (5) to provide oil to a primary conduit (6) and to a secondary conduit (7),
said primary conduit (6) being configured to be fluidly connected to essential operative system hydraulic circuits (3) of said vehicle and said secondary conduit (7) being configured to be fluidly connected to other operative systems hydraulic circuits (4) of said vehicle,
said other operative systems hydraulic circuits (4) comprising a hitch control hydraulic circuit (8) and at least one auxiliary valve hydraulic circuit (9) respectively connected by conduits (11, 12) to said secondary conduit (7),
wherein said hydraulic circuit (1) comprises sensor means (13, 14) configured to be interposed on said conduits (11, 12) and configured to detect oil characteristics of the oil flow flowing into said conduits (11, 12),
said hydraulic circuit (1) being provided by an electronic control unit (16) electrically connected to said sensor means (13, 14) and to said torque source (5) and comprising elaboration means (17) configured to acquire the data detected by said sensor means (13, 14) and, in function of said acquired data to control said oil flow demand of said other operative systems hydraulic circuits (4) and execute at least one between i) provide a warning signal and ii) control said torque source (5),
the hydraulic circuit (1) is **characterized in that** said electronic control unit (16) is electrically connected to user control means (18) configured to allow the user to control the oil flow priority between said hitch control hydraulic circuit (8) and at least one auxiliary valve hydraulic circuit (9).

2. Hydraulic circuit according to claim 1, wherein said sensor means (13, 14) comprises a pressure sensors or a flowmeter sensor.

3. Hydraulic circuit according to claim 1, wherein said user control means (18) comprises display means configured to provide a plurality of touch areas (U', U", N', N", N‴) each configured to provide a control on one or more between said hitch control hydraulic circuit (8) and at least one auxiliary valve hydraulic circuit (9).

4. Hydraulic circuit according to any of the preceding claims, wherein said elaboration means (17) are configured to receive input data (I', I") from said sensor means (13, 14) and input data (I‴) from said torque source (5), said elaboration means (17) providing control outputs (O', O") for varying the flow demand of said other operative systems hydraulic circuits (4) and/or control outputs (O‴) for executing at least one between i) provide a warning signal and ii) control said torque source, in function of said input data (I', I", I‴).

5. Hydraulic circuit according to claims 3 or 4, wherein said elaboration means (17) are configured to electrically connected to user control means (18) to receive user input data, said user input data being elaborated by said elaboration means (17) together with said input data (I', I", I‴) to provide said output data (O', O", O‴).

6. Hydraulic circuit according to claim 5, wherein said user control means (18) are configured to display to said user some information related to said output data (O', O", O‴).

7. Hydraulic circuit according to any of the preceding claims, wherein said essential operative system circuits (3) comprises a steering, a braking and a transmission hydraulic circuit of said agricultural vehicle.

8. Control method to an oil flow partition between different operative systems hydraulic circuits (4) of a secondary line (7) of a hydraulic circuit according to any of the preceding claims, said control method comprising the following steps:
i) Acquiring data (I', I'') related to the oil flow flowing into different operative systems (8, 9) of said operative systems hydraulic circuits (4);
ii) Elaborating such data to compare the detected flow with respect to the available flow (I‴) coming from said pump means (2);
iii) If such detected flow is greater with respect to the available flow, execute at least one between i) provide a warning signal and ii) control said torque source (5);and
iv) divide the possible flow among the different operative systems hydraulic circuits (4) in function of their flow demand.

9. Method according to claim 8, further comprising the following steps:
v) Acquire input data related to an user's request to prioritize flow to at least one among the operative systems hydraulic circuits (4);
vi) Prioritize the flow coming to the secondary line to the selected at least one operative systems hydraulic circuits (4) .

## Patentansprüche

1. Hydraulikkreis (1) für ein landwirtschaftliches Fahrzeug umfassend eine Pumpeinrichtung (2), die von einer Drehmomentquelle (5) betrieben wird, um einer Primärleitung (6) und einer Sekundärleitung (7) Öl zuzuführen, wobei die Primärleitung (6) dazu eingerichtet ist, mit essenziellen Betriebsmittel-Hydraulickreisen (3) des Fahrzeugs in Fluidverbindung zu stehen, und wobei die Sekundärleitung (7) dazu eingerichtet ist, mit weiteren Betriebsmittel-Hydraulikkreisen (4) des Fahrzeugs in Fluidverbindung zu stehen,
wobei die weiteren Betriebsmittel-Hydraulikkreise (4) einen Anhängerkupplung-Steuerhydraulikkreis (8) und mindestens einen Hilfsventil-Hydraulikkreis (9) umfassen, die jeweils durch Leitungen (11, 12) mit der Sekundärleitung (7) verbunden sind,
wobei der Hydraulikkreis (1) Sensoreinrichtungen (13, 14) umfasst, die dazu eingerichtet sind, an den Leitungen (11, 12) zwischengeschaltet zu sein, und die dazu eingerichtet sind, Öl-Eigenschaften des Ölstroms, der in den Leitungen (11, 12) fließt, zu erfassen,
wobei der Hydraulikkreis (1) mit einer elektronischen Steuereinheit (16) versehen ist, die mit den Sensoreinrichtungen (13, 14) und mit der Drehmomentquelle (5) elektrisch verbunden ist und die Verarbeitungseinrichtungen (17) umfasst, die dazu eingerichtet sind, die von den Sensoreinrichtungen (13, 14) erfassten Daten zu erhalten und in Abhängigkeit von den erhaltenen Daten den Ölstrombedarf der weiteren Betriebsmittel-Hydraulikkreise (4) zu steuern und mindestens einen Schritt aus i) Abgeben eines Warnsignals und ii) Steuern der Drehmomentquelle (5) auszuführen,
wobei der Hydraulikkreis (1) **dadurch gekennzeichnet ist, dass** die elektronische Steuerungseinheit (16) mit Bediener-Steuerungseinrichtungen (18) elektrisch verbunden ist, die dazu eingerichtet sind, es dem Bediener zu ermöglichen, die Ölstrom-Priorität zwischen dem Anhängerkupplung-Steuerhydraulikkreis (8) und dem mindestes einen Hilfsventil-Hydraulikkreis (9) zu steuern.

2. Hydraulikkreis nach Anspruch 1, wobei die Sensoreinrichtungen (13, 14) einen Drucksensor oder einen Strömungssensor umfassen.

3. Hydraulikkreis nach Anspruch 1, wobei die Bediener-Steuerungseinrichtungen (18) Anzeigeeinrichtungen umfassen, die dazu eingerichtet sind, eine Mehrzahl von Berührungsfeldern (U', U", N', N", N‴) bereitzustellen, die jeweils dazu eingerichtet sind, eine Steuerung an einem oder mehreren aus dem Anhängerkupplung-Steuerhydraulikkreis (8) und dem mindestens einen Hilfsventil-Hydraulikkreis (9) auszuführen.

4. Hydraulikkreis nach einem der vorhergehenden Ansprüche, wobei die Verarbeitungseinrichtungen (17) dazu eingerichtet sind, Eingabedaten (I', II") von den Sensoreinrichtungen (13, 14) und Eingabedaten (I‴) von der Drehmomentquelle (5) zu erhalten, wobei die Verarbeitungseinrichtungen (17) Steuerungs-Ausgangssignale (O', O") zur Veränderung der Strömungsanforderung der weiteren Betriebsmittel-Hydraulikkreise (4) und/oder Steuerungs-Ausgangssignale (O‴) zur Ausführung von mindestens einem Schritt aus i) Abgeben eines Warnsignals und ii) Steuern der Drehmomentquelle, in Abhängigkeit der Eingabedaten (I', I", I‴), bereitstellen.

5. Hydraulikkreis nach Anspruch 3 oder 4, wobei die Verarbeitungseinrichtungen (17) dazu eingerichtet sind, mit den Bediener-Steuerungseinrichtungen (18) elektrisch verbunden zu sein, um Bediener-Eingabedaten zu erhalten, wobei die Bediener-Eingabedaten von den Verarbeitungseinrichtungen (17) zusammen mit den Eingabedaten (I', I", I‴) verarbeitet werden, um die Ausgabedaten (O', O", O‴) bereitzustellen.

6. Hydraulikkreis nach Anspruch 5, wobei die Bediener-Steuerungseinrichtungen (18) dazu eingerichtet sind, dem Bediener bestimmte Informationen bezüglich der Ausgabedaten (O', O", O‴) anzuzeigen.

7. Hydraulikkreis nach einem der vorhergehenden Ansprüche, wobei die essenziellen Betriebsmittel-Hydraulikkreise (3) einen Lenk-, einen Brems- und einen Getriebe-Hydraulikkreis des landwirtschaftlichen Fahrzeugs umfassen.

8. Steuerungsverfahren für die Aufteilung eines Ölstroms zwischen verschiedenen Betriebsmittel-Hydraulikkreisen (4) einer Sekundärleitung (7) eines Hydraulickreises nach einem der vorhergehenden Ansprüche, wobei das Steuerungsverfahren die folgenden Schritte umfasst:
i) Erfassen von Daten (I', I") betreffend den Ölstrom, der in verschiedene Betriebsmittel (8, 9) der Betriebsmittel-Hydraulikkreise (4) strömt;
ii) Verarbeiten dieser Daten, um den erfassten Ölstrom mit dem verfügbaren Ölstrom (I‴), der von den Pumpeinrichtungen (2) ankommt, zu vergleichen;
iii) Ausführen mindestens eines Schritts aus i) Abgeben eines Warnsignals und ii) Steuern der Drehmomentquelle (5), wenn der erfasste Ölstrom größer als der verfügbare Ölstrom ist; und
iv) Aufteilen des möglichen Ölstroms zwischen den verschiedenen Betriebsmittel-Hydraulikkreisen (4) in Abhängigkeit von dem Ölstrombedarf derselben.

9. Verfahren nach Anspruch 8, weiterhin umfassend die folgenden Schritte:
v) Erfassen von Eingabedaten betreffend eine Bedieneranforderung, den Ölstrom für mindestens einen der Betriebsmittel-Hydraulikkreise (4) zu priorisieren;
vi) Priorisieren des Ölstroms, der an der Sekundärleitung ankommt, für den mindestens einen ausgewählten Betriebsmittel-Hydraulikkreis (4).

## Revendications

1. Circuit hydraulique (1) pour un véhicule agricole comprenant une pompe (2) soutenue par une source de couple (5) pour alimenter en huile un conduit principal (6) et un conduit secondaire (7), ledit conduit principal (6) étant configuré pour être raccordé fluidiquement aux circuits hydrauliques des systèmes opérationnels essentiels (3) dudit véhicule et ledit conduit secondaire (7) étant configuré pour être raccordé fluidiquement à d'autres circuits hydrauliques des systèmes opérationnels (4) dudit véhicule,
lesdits autres circuits hydrauliques des systèmes opérationnels (4) comprenant un circuit hydraulique de commande d'attelage (8) et au moins un circuit hydraulique de vanne auxiliaire (9) respectivement raccordés par des conduits (11, 12) audit conduit secondaire (7),
dans lequel ledit circuit hydraulique (1) comprend des moyens de détection (13, 14) configurés pour être interposés sur lesdits conduits (11, 12) et configurés pour détecter les caractéristiques d'huile du flux d'huile s'écoulant dans lesdits conduits (11, 12),
ledit circuit hydraulique (1) étant fourni par une unité de commande électronique (16) raccordée électriquement auxdits moyens de détection (13, 14) et à ladite source de couple (5) et comprenant des moyens d'élaboration (17) configurés pour acquérir les données détectées par lesdits moyens de détection (13, 14) et, en fonction desdites données acquises, de contrôler la demande dudit flux d'huile desdits autres circuits hydrauliques des systèmes opérationnels (4) et d'exécuter au moins l'une des actions parmi i) fournir un signal d'avertissement et ii) contrôler ladite source de couple (5),
le circuit hydraulique (1) est **caractérisé en ce que** ladite unité de commande électronique (16) est raccordée électriquement à des moyens de commande utilisateur (18) configurés pour permettre à l'utilisateur de contrôler la priorité du flux d'huile entre ledit circuit hydraulique de commande d'attelage (8) et au moins un circuit hydraulique de vanne auxiliaire (9).

2. Circuit hydraulique selon la revendication 1, dans lequel lesdits moyens de détection (13, 14) comprennent des capteurs de pression ou un capteur de débit.

3. Circuit hydraulique selon la revendication 1, dans lequel lesdits moyens de commande utilisateur (18) comprennent des moyens d'affichage configurés pour fournir une pluralité de zones tactiles (U', U", N', N", N‴) chacune configurée pour fournir un contrôle sur un ou plusieurs parmi ledit circuit hydraulique de commande d'attelage (8) et au moins un circuit hydraulique de vanne auxiliaire (9).

4. Circuit hydraulique selon l'une quelconque des revendications précédentes, dans lequel lesdits moyens d'élaboration (17) sont configurés pour recevoir des données d'entrée (I', I") provenant desdits moyens de détection (13, 14) et des données d'entrée (I‴) provenant de ladite source de couple (5), lesdits moyens d'élaboration (17) fournissant des sorties de commande (O', O") pour faire varier la demande de flux desdits autres circuits hydrauliques de systèmes opérationnels (4) et/ou des sorties de commande (O‴) pour exécuter au moins l'une des actions parmi i) fournir un signal d'avertissement et ii) commander ladite source de couple, en fonction desdites données d'entrée (I', I", I‴).

5. Circuit hydraulique selon les revendications 3 ou 4, dans lequel lesdits moyens d'élaboration (17) sont configurés pour être raccordés électriquement à des moyens de commande utilisateur (18) pour recevoir des données d'entrée utilisateur, lesdites données d'entrée utilisateur étant élaborées par lesdits moyens d'élaboration (17) conjointement avec lesdites données d'entrée (I', I", I‴) pour fournir lesdites données de sortie (O', O", O‴).

6. Circuit hydraulique selon la revendication 5, dans lequel lesdits moyens de commande utilisateur (18) sont configurés pour afficher audit utilisateur certaines informations liées auxdites données de sortie (O', O", O‴).

7. Circuit hydraulique selon l'une quelconque des revendications précédentes, dans lequel lesdits circuits du système opérationnel essentiel (3) comprennent un circuit hydraulique de direction, de freinage et de transmission dudit véhicule agricole.

8. Procédé de commande d'une répartition de flux d'huile entre différents circuits hydrauliques de systèmes opérationnels (4) d'une ligne secondaire (7) d'un circuit hydraulique selon l'une quelconque des revendications précédentes, ledit procédé de commande comprenant les étapes suivantes :
i) acquisition de données (I', I") relatives au flux d'huile circulant dans les différents systèmes opérationnels (8, 9) des circuits hydrauliques de systèmes opérationnels (4) ;
ii) élaboration de telles données pour comparer le débit détecté par rapport au débit disponible (I‴) provenant desdits moyens de pompage (2) ;
iii) si un tel débit détecté est supérieur au débit disponible, exécuter au moins l'une des actions parmi i) fournir un signal d'avertissement et ii) contrôler ladite source de couple (5) ; et
iv) répartir le débit possible entre les différents circuits hydrauliques de systèmes opérationnels (4) en fonction de leur demande de débit.

9. Procédé selon la revendication 8 comprenant en outre les étapes suivantes :
v) acquérir des données d'entrée liées à une demande d'un utilisateur visant à prioriser un débit à au moins un parmi les circuits hydrauliques de systèmes opérationnels (4) ;
vi) prioriser le débit arrivant à la ligne secondaire vers l'au moins un circuit hydraulique de systèmes opérationnels sélectionné (4).
